# EUROPEAN PATENT APPLICATION

(11) **EP 4 822 776 A1**
(43) Date of publication of application: **14.10.2026**
(21) Application number: 25832136.3
(22) Date of filing: 05.08.2025
(51) Int. Cl.: H01M 4/38, H01M 4/62, H01M 10/0525, H01M 4/02

(54) **NEGATIVE ELECTRODE MATERIAL AND BATTERY**

(30) Priority: 19.08.2024 CN 202411131888; 19.08.2024 CN 202411693736
(71) Applicant: BTR New Material Group Co., Ltd., Shenzhen, Guangdong 518106 (CN)
(72) Inventor: AN, Weili, Shenzhen, Guangdong 518106 (CN); HE, Peng, Shenzhen, Guangdong 518106 (CN); REN, Jianguo, Shenzhen, Guangdong 518106 (CN); HE, Xueqin, Shenzhen, Guangdong 518106 (CN)
(74) Representative: advotec.
(86) International application number: PCT/CN2025/112674
(87) International publication number: WO 2026/008082

(57) **Abstract**

An anode material and a battery provided. The anode material includes an active material. The active material includes a first matrix and a second matrix. The anode material has pores. The anode material has a pore volume represented as M cm³/g, a pore volume measured after being subjected to a pressure of 80 MPa for 1 h represented as N cm³/g, and a particle spatial collapse ratio represented as P, and P=(M-N)/M, where 0.002≤M≤0.12, and 0.05≤P≤0.85. By controlling the pore volumes of the anode material before and after the pressurization, the rigidity strength of the anode material is modulated, thereby improving electrochemical performances of the anode material while ensuring the structure stability of the anode material.

## Description

### CROSS-REFERENCE TO RELATED APPLICATIONS

This application claims the priority of the Chinese patent application No. 202411131888.2 filed with the China National Intellectual Property Administration on August 19, 2024, titled with "ANODE MATERIAL AND BATTERY", and the Chinese patent application No. 202411693736.1 filed with the China National Intellectual Property Administration on August 19, 2024, titled with "ANODE MATERIAL AND BATTERY", the contents of which are incorporated herein by reference.

### TECHNICAL FIELD

The present application relates to the technical field of battery materials, particularly to an anode material and a battery using the same.

### BACKGROUND

Lithium-ion batteries are widely used in electric vehicles and consumer electronics due to their high energy density, excellent power output, long cycle life, and low environmental pollution. In order to further improve the energy density of batteries, research and development on a silicon anode material has become particularly important.

However, the silicon anode material exhibits significant volume expansion during lithium intercalation and deintercalation, causing the silicon anode material to be easily pulverizee and peeled off from the current collector during charging and discharging. This situation disrupts the electrical contact between the active material and the current collector, leading to electrochemical performance degradation, capacity fading, and weakened cycle stability, thereby making it difficult to achieve commercial application.

### SUMMARY

To solve at least one of the above technical problems, embodiments of the present application provide an anode material.

In addition, embodiments of the present application further provide a battery including the anode material.

Some embodiments of the present application provide an anode material, including an active material. The active material includes a first matrix and a second matrix. The anode material has pores. The anode material has a pore volume represented as M cm³/g, a pore volume measured after being subjected to a pressure of 80 MPa for 1 h represented as N cm³/g, and a particle spatial collapse ratio represented as P, and P=(M-N)/M, where 0.002≤M≤0.12, and 0.05≤P≤0.85.

Some embodiments of the present application further provide a battery, including a cathode plate, an anode plate, a separator, and an electrolyte, where the anode plate includes the anode material.

Compared with the prior art, in the anode material provided by embodiments of the present application, by controlling the pore volumes M and N of the anode material before and after the pressurization, the rigidity strength of the anode material is modulated. Based on the pore volume before the pressurization M cm³/g of the anode material and the pore volume after the pressurization N cm³/g of the anode material, the particle spatial collapse ratio P of the anode material is controlled within a suitable range to modulate the rigidity strength of the anode material, thereby improving various electrochemical performances of the anode material while ensuring the structure stability of the anode material, such as improving the cycle stability of the battery prepared by the anode material; solving the problems of breakage and cracking that are easily occurred to the electrode plate prepared by the anode material during a rolling process, and improving the poor processability of the anode material.

### BRIEF DESCRIPTION OF DRAWINGS

FIG. 1 is a process flow diagram of the preparation method of the anode material provided by embodiments of the present application.
FIG. 2 is a structure schematic diagram of the battery provided by embodiments of the present application.
FIG. 3 is a scanning electron microscope image of the anode material of Example 1 of the present application.
FIG. 4 is an X-ray diffraction pattern of the anode material of Example 1 of the present application.
FIG. 5 is a cycling performance curve of the battery prepared by the anode material of Example 1 of the present application.

### DESCRIPTION OF EMBODIMENTS

The technical solutions in the embodiments of the present application will be clearly and completely described below in conjunction with the accompanying drawings in the embodiments of the present application. Obviously, the described embodiments are merely a part of the embodiments of the present application, rather than all of the embodiments. All other embodiments obtained by those skilled in the art based on the embodiments of the present application without creative efforts shall fall within the protection scope of the present application.

To address the issues of poor conductivity and cycle stability of an anode material, researchers have attempted to adopt a coating method. However, the existing preparation processes for coating are quite complex, and the simple coating layer will undergo significant volume expansion and contraction of the anode material during charging and discharging, which may lead to rupture and failure of the coating layer, failing to protect the anode material from structure damage and failing to effectively improve electrochemical performance of the anode material.

The applicant discover through research that changes in the quantity and volume of pores in the anode material before and after being subjected to pressure have a significant impact on the volume expansion and performance of the anode material. To this end, embodiments of the present application provide an anode material, including an active material. The active material includes a first matrix and a second matrix. The anode material has pores. The anode material has a pore volume represented as M cm³/g (i.e., the pore volume of the anode material in a natural state or an unpressurized state), a pore volume measured after being subjected to a pressure of 80 MPa for 1 h represented as N cm³/g, and a particle spatial collapse ratio P defined by (M-N)/M, namely P=(M-N)/M, where 0.002≤M≤0.12, and 0.05≤P≤0.85. By controlling the pore volumes M and N of the anode material before and after the pressurization, the particle spatial collapse ratio P of the anode material is controlled within a suitable range, to modulate the rigidity strength of the anode material, thereby improving various electrochemical performances of the anode material while ensuring the structure stability of the anode material, such as improving the cycle stability of the battery prepared by the anode material; solving the problems of breakage and cracking that are easily occurred to the electrode plate prepared by the anode material during a rolling process, and improving the poor processability of the anode material.

Specifically, under an appropriate pressure, by controlling the particle spatial collapse ratio P of the anode material within the range of 0.05-0.85, the rigidity strength of the material is improved, appropriately reducing the pores inside the anode material, reducing the deformation of outer surface of the anode material, and ensuring a stable solid electrolyte membrane to be formed on surface of the anode material, thereby improving the initial coulombic efficiency of the anode material. If the particle spatial collapse ratio of the anode material is too low (lower than 0.05), the huge stress generated by the first matrix (e.g., silicon-based material) after lithiation will burst the entire anode material, resulting in a deterioration of the cycling performance of the battery prepared by the anode material; if the particle spatial collapse ratio of the anode material is too high (higher than 0.85), the anode material will have a relatively weaker rigidity strength, and there are relatively more pores therein. Although the volume expansion of the first matrix is effectively alleviated, the side reactions between the anode material and the electrolyte causing by the inflow of the electrolyte into the material are increased due to the relatively larger volume shrinkage of the anode material, thereby resulting in severe capacity fading of the battery prepared by the anode material.

The value of the pore volume M of the anode material directly affects the particle spatial collapse ratio P of the anode material. To control the particle spatial collapse ratio P within the range of 0.05-0.85, the anode material needs to have a suitable pore volume M.

The pore volume M of the anode material needs to be controlled within a range of 0.002 to 0.12. This is because if the pore volume M is too large (greater than 0.12), the structure of the anode material will be too loose, while if the pore volume M is too small (less than 0.002), particles of the anode material will be unable to effectively alleviate the volume expansion of the active material, such as elemental silicon, resulting in bursting and pulverization. The battery prepared by the anode material will occur significant volume changes due to the loose structure or particle pulverization of the anode material during cycling, resulting in capacity fading. In the present application, controlling the pore volume M within the range of 0.002 to 0.12 effectively extends the service life and cycle stability of the battery prepared by the anode material. Limiting the range of the pore volume M also adjusts the specific surface area and ion diffusion path of the anode material, facilitating improvement of the electron transport rate and ion diffusion rate of the anode material, thereby enhancing the charge-discharge efficiency of the battery prepared by the anode material.

The pore volume M of the anode material is derived from the pores present in the anode material. By adjusting the pore diameter of the pores in the anode material, the pore volume of the anode material is modulated, and the particle spatial collapse ratio of the anode material is controlled, to meet the requirements for stability and performance of the battery material during use.

In some embodiments, M is 0.002, 0.007, 0.009, 0.02, 0.04, 0.05, 0.06, 0.08, 0.09, 0.1, 0.11, 0.12, or any value within the range defined by any two above values, which is not limited herein. Preferably, 0.03≤M≤0.1.

In some embodiments, the particle spatial collapse ratio P of the anode material is 0.05, 0.1, 0.15, 0.2, 0.22, 0.25, 0.3, 0.35, 0.4, 0.45, 0.5, 0.55, 0.6, 0.65, 0.7, 0.75, 0.8, 0.85, or any value within the range defined by any two above values, which is not limited herein. Preferably, 0.3≤P≤0.85.

In some embodiments, the pores of the anode material has an average diameter of 0.5 nm to 20 nm. Exemplarily, the average diameter of the pores may be 0.5 nm, 1 nm, 2 nm, 5 nm, 8 nm, 10 nm, 15 nm, 20 nm, etc., or other values within the above ranges, which is not limited herein. The pore diameter affects the specific surface area of the anode material. The smaller pores usually have a higher specific surface area, which is conducive to the diffusion of electrolyte and ions, while the larger pores improves the expansion performance of the anode material, which is contribute to the stability and cycle life of the anode material. Within the above ranges, the anode material maintains structure stability and promotes rapid ion diffusion, as well as reduces the penetration of electrolyte into the anode material and reduces the side reactions between the anode material and the electrolyte. Meanwhile, the pore volume and particle spatial collapse ratio of the anode material are further adjusted. Further, the average diameter of the pores is 2 nm to 15 nm.

In some embodiments, the first matrix includes an elementary substance or a composition of at least one of silicon, germanium, antimony, tin, and boron. For example, when elemental silicon is used as a component of the anode active material, the specific capacity of the anode material is increased, thereby increasing the energy density of the battery prepared by the anode material.

In some embodiments, the first matrix includes a silicon-based material, the silicon-based material includes elemental silicon, and the elemental silicon includes amorphous silicon, crystalline silicon, or a composite of crystalline silicon and amorphous silicon. For example, the first matrix includes the amorphous silicon which expands isotropically during the lithium intercalation, reducing collapse of the pores in the anode material, inhibiting rapid fading of the specific capacity of the anode material, and more conduciving to improving cycling performance of the anode material during the lithium intercalation.

In some embodiments, the first matrix includes a silicon-based material, and the silicon-based material includes at least one of silicon oxide and silicon alloy.

In some embodiments, the silicon oxide includes silicon element and oxygen element at an atomic ratio of 0 to 2, excluding 0. The atomic ratio of silicon element and oxygen element may specifically be 0.05, 0.11, 0.21, 0.26, 0.31, 0.41, 0.51, 0.59, 0.61, 0.69, 0.71, 0.74, 0.76, 0.79, 0.89, 0.99, 1, 1.1, 1.2, 1.3, 1.4, 1.5, 1.6, 1.7, 1.8, 1.9, 2, etc., which is not limited herein. Preferably, the atomic ratio of silicon element and oxygen element is 0 to 1, excluding 0.

In some embodiments, the silicon oxide has a chemical formula of SiOₓ, where 0 < x ≤ 2. x may specifically be 0.05, 0.11, 0.21, 0.26, 0.31, 0.41, 0.51, 0.59, 0.61, 0.69, 0.71, 0.74, 0.76, 0.79, 0.89, 0.99, 1, 1.1, 1.2, 1.3, 1.4, 1.5, 1.6, 1.7, 1.8, 1.9, 2, etc., which is not limited herein. Preferably, 0<x<1.

In some embodiments, the first matrix has a morphology including at least one of dot, spherical, ellipsoidal, and flake shape. The morphology of the first matrix may be selected according to actual needs, which is not limited herein.

In some embodiments, the first matrix has a purity greater than 99%. Taking silicon particles as the active material as an example, high-purity silicon particles are more conducive to Li-Si alloying with lithium, improving the cycling performance of the battery.

In some embodiments, the second matrix includes a carbon material, and the carbon material includes at least one of artificial graphite, natural graphite, amorphous carbon, activated carbon, mesocarbon microbead, carbon nanotube, carbon nanofiber, and graphene. The second matrix, selected from the above materials, functions to form a conductive network with the first matrix.

In some embodiments, the second matrix includes a non-carbon material, and the non-carbon material includes at least one of elemental metal, metal oxide, silicide, silicate, phosphate, titanate, and aluminum borate. It can be appreciated that the non-carbon material, adopting the above materials, has good strength and stiffness, which enables the anode material to have a higher compacted density during the battery preparation, improving the structure stability of the anode material, reducing breakage and pulverization of particles of the anode material, and facilitating improvement of the cycling performance of the anode material. Meanwhile, the non-carbon material, due to its electronic insulation, usually has good ionic conductivity, which functions like an artificial SEI film, slowing down the subsequent formation of a natural SEI film, reducing direct contact between the anode material and the electrolyte, and reducing the occurrence of side reactions.

In some embodiments, the elemental metal includes at least one of copper, silver, tin, lead, aluminum, and zinc.

In some embodiments, the metal oxide includes at least one of aluminum oxide, zirconium oxide, germanium dioxide, and manganese dioxide.

In some embodiments, the silicide includes at least one of silicon carbide and silicon nitride.

In some embodiments, the silicate includes at least one of cordierite, mullite, and zeolite. It can be appreciated that the silicate of the present application is mainly a natural silicate mineral, where cordierite (magnesium aluminum silicate) has a chemical formula of Mg₂Al₄Si₅O₁₈, which contains elements such as Na, K, Ca, Fe and Mn, and H₂O; mullite has a chemical formula of 3Al₂O₃-2SiO₂; zeolite (aluminosilicate) has a chemical formula of AₘBₚO₂ₚ·nH₂O, where A represents a cation, typically including a monovalent or divalent metal ion such as Ca, Na, K, Ba, and Sr; B represents a basic unit for constituting framework structure of the zeolite, namely Si and Al atoms, p is a valence of the cation, m is number of the cation A, and n is number of the water molecule.

In some embodiments, the phosphate includes at least one of aluminum phosphate, magnesium phosphate, calcium phosphate, titanium phosphate, chromium phosphate, cobalt phosphate, nickel phosphate, germanium phosphate, zirconium phosphate, niobium phosphate, molybdenum phosphate, tantalum phosphate, tungsten phosphate, and lanthanum phosphate.

In some embodiments, the titanate includes at least one of calcium titanate, iron titanate, lithium titanate, and barium titanate.

In the anode material, at least part of particles of the second matrix is located inside the particles of the first matrix.

For example, the silicon-based material is selected as the first matrix, and the carbon material is selected as the second matrix. The silicon-based material is present in a form of silicon grains, and a plurality of silicon-based material particles constitute the matrix of the anode material. With the silicon-based material as the matrix, the anode material regulate its various properties by utilizing nanostructure and pore distribution of the silicon-based material. At least part of the carbon material is located in the pores of the silicon-based material and form the pores of the anode material together with the silicon-based material. By filling the carbon material into the pores of the silicon-based material in this way, a certain pore volume is retained to obtain a suitable particle spatial collapse ratio, thereby modulating the rigidity strength of the anode material.

It can be appreciated that alternatively, the carbon material is selected as the first matrix and the silicon-based material is selected as the second matrix. A plurality of carbon material particles constitute the matrix of the anode material. With the carbon material as the matrix, the anode material regulate its various properties by utilizing nanostructure and pore distribution of the carbon material. At least part of the silicon-based material is located in the pores of the carbon material and form the pores of the anode material together with the carbon material. By filling the silicon-based material into the pores of the carbon material in this way, a certain pore volume is retained to obtain a suitable particle spatial collapse ratio, thereby modulating the rigidity strength of the anode material.

In some embodiments, primary particles of the silicon-based material have an average particle size of 1 nm to 100 nm, which, for example, may be 1 nm, 5 nm, 10 nm, 15 nm, 20 nm, 30 nm, 40 nm, 50 nm, 60 nm, 70 nm, 80 nm, 90 nm, or 100 nm, or other values within the above ranges, which is not limited herein. Controlling the average particle size of the silicon particles in the silicon-based material between 1 nm and 100 nm adjusts the specific surface area and electron transport path of the anode material, facilitating improvement of the electrochemical performance of the anode material. Further, the average particle size of the primary particles of the silicon-based material is 5 nm to 50 nm. Herein, the term "primary particle" refers to a primary structure of a single particle, and the term "secondary particle" refers to an aggregate formed by physical or chemical bonding among the primary particles, i.e., a secondary structure, and there is no intentional process for aggregating or combining the primary particles to form the secondary particle.

In some embodiments, silicon grains of the silicon-based material have an average size of 0.5 nm to 15 nm, which, for example, may be 0.5 nm, 1 nm, 2 nm, 5 nm, 8 nm, 10 nm, 12 nm, or 15 nm, or other values within the above ranges, which is not limited herein. The nanoscale silicon grain with a smaller size usually have a higher specific surface area, facilitating charge transport and ion diffusion of the anode material as well as inhibition of the volume expansion, thereby improving the electrochemical performance of the anode material, and increasing the stability and cycle life of the anode material. Further, the average size of the silicon grains of the silicon-based material is 2 nm to 10 nm.

Further, the anode material further includes a coating layer disposed on at least part of surface of the active material. The coating layer is conducive to improving the structure stability and electrical conductivity of the anode material. The synergistic effect of a suitable particle spatial collapse ratio of the anode material and a uniform coating layer on the surface of the anode material further improves the structure stability of the anode material during the lithiation, reduces the expansion rate of the anode material, facilitates formation of a stable solid electrolyte membrane on the surface of the anode material, and also facilitates improvement of the electrical conductivity of the anode material, thereby enhancing the electrochemical performance of the anode material.

In some embodiments, a material of the coating layer includes at least one of metal oxide, carbon material, conductive polymer, fluoride, phosphate, and nitride.

In some embodiments, the coating layer includes a carbon material, and the carbon material includes at least one of graphene, soft carbon, and hard carbon. Reasonably designing the carbon material raw material for the anode material effectively inhibits the volume expansion of the anode material, reduces structure damage to the anode material during cycling, and further enhances the mechanical strength and resistance to pressure of the anode material.

In some embodiments, the coating layer includes a metal oxide, and the metal oxide includes at least one of titanium oxide, aluminum oxide, lithium oxide, cobalt oxide, and vanadium oxide.

In some embodiments, the coating layer includes a nitride, and the nitride includes at least one of titanium nitride, vanadium nitride, cobalt nitride, nickel nitride, and carbon nitride.

In some embodiments, the conductive polymer includes at least one of polyaniline, polyacetylene, polypyrrole, polythiophene, poly(3-hexylthiophene), poly(p-phenylene vinylene), polypyridine, and polyphenylene vinylene.

In some embodiments, the fluoride includes at least one of vinyl fluoride, fluoropolymer, lithium fluoride, sodium fluoride, potassium fluoride, fluorocarbon polymer, fluorosilicone polymer, hexafluorobutyl acrylate, polytetrafluoroethylene (PTFE), fluorinated ethylene propylene copolymer (FEP), perfluoroalkoxy resin (PFA), polychlorotrifluoroethylene (PCTFE), ethylene-chlorotrifluoroethylene copolymer (ECTFE), polyvinylidene fluoride (PVDF), and polyvinyl fluoride.

In some embodiments, the phosphate includes at least one of magnesium phosphate, calcium phosphate, aluminum phosphate, titanium phosphate, chromium phosphate, cobalt phosphate, nickel phosphate, germanium phosphate, zirconium phosphate, niobium phosphate, molybdenum phosphate, tantalum phosphate, tungsten phosphate, and lanthanum phosphate.

In some embodiments, the coating layer has a thickness of 0.1 nm to 100 nm. For example, the thickness of the coating layer may be 0.1 nm, 5 nm, 10 nm, 30 nm, 50 nm, 80 nm, 100 nm, or any value within the range defined by any two above values. The coating layer reduces the solubility of the anode material, thereby reducing the gas generation caused by the reaction between the dissolved active material and the electrolyte. Controlling the thickness of the coating layer within the above range is conducive to maintaining the stability of the particle structure of the anode material during cycling, and reduces the exposed active material on surface of the anode material. Further, the thickness of the coating layer is 1 nm to 50 nm, and furthermore, the thickness of the coating layer is 1 nm to 20 nm, which facilitate the rapid and reversible intercalation and deintercalation of lithium ions.

In some embodiments, the coating layer is a single coating layer formed by the above single material, a coating layer formed by the above multiple materials, a multi coating layer formed by the single material, or a multi coating layer formed by the multiple materials, or the like. The layer structure of the coating layer may be selected according to actual needs. It can be appreciated that when the coating layer has a structure of multi coating layer, the density is higher.

In some embodiments, the anode material has a median particle size of 0.2 µm to 15 µm, which, for example, may be 0.2 µm, 0.5 µm, 1 µm, 2 µm, 5 µm, 10 µm, or 15 µm, or other values within the above ranges, which is not limited herein. The median particle size of the anode material directly affects the specific surface area and electron transport path of the anode material. A smaller particle size usually means a larger specific surface area, which is conducive to the progress of electrochemical reactions and the rapid charge transport, thereby improving the power density and energy density of the battery. Moreover, the smaller particle size reduces the volume change of the material during lithium-ion intercalation/deintercalation cycling, which facilitates reduction of the structural stress and deformation, thereby extending the cycle life of the battery. The range of the median particle size further affects the pore structure and pore volume of the anode material, and affects the particle spatial collapse ratio of the anode material. Further, the median particle size of the anode material is 1 µm to 10 µm.

In some embodiments, the anode material has a specific surface area of 0.8 m²/g to 15 m²/g, which, for example, may be 0.8 m²/g, 1 m²/g, 2 m²/g, 5 m²/g, 8 m²/g, 10 m²/g, or 15 m²/g, or other values within the above ranges, which is not limited herein. Within the above ranges, it is conducive to the progress of electrochemical reactions and the rapid charge transport, thereby improving the electrochemical performance of the anode material. Further, the specific surface area of the anode material is 2 m²/g to 10 m²/g.

In some embodiments, the anode material has a powder compaction density of 0.8 g/cm³ to 1.5 g/cm³, which, for example, may be 0.8 g/cm³, 0.9 g/cm³, 1 g/cm³, 1.1 g/cm³, 1.2 g/cm³, 1.3 g/cm³, 1.4 g/cm³, or 1.5 g/cm³, or other values within the above range, which is not limited herein. Within the above compaction density range, the anode material has a suitable charge transfer rate and electrolyte contact area, and also has suitable and good structure stability. Further, the powder compaction density of the anode material is 1 g/cm³ to 1.2 g/cm³.

In some embodiments, the second matrix includes a carbon material. Based on the mass of the anode material, carbon element in the anode material accounts for a content of 5% to 70% by mass percentage, which, for example, may be 5%, 10%, 20%, 30%, 40%, 50%, 60%, or 70%, etc., or other values within the above range, which is not limited herein. Within the above range, by adjusting the content of carbon element in the anode material, the electrochemical performance and structure stability of the anode material are optimized. Further, the content of carbon element in the anode material is 10% to 60%.

In some embodiments, the anode material further includes oxygen element. Based on the mass of the anode material, oxygen element in the anode material accounts for a mass ratio of less than or equal to 10% by mass percentage, which, for example, may be 1%, 3%, 5%, 8%, or 10%, etc., or other values within the above range, which is not limited herein. The introduction of a certain amount of oxygen element affects the structure and chemical properties of the anode material and regulates the pore structure of the anode material. During the synthesis of the anode material, the oxygen element within the above content range forms oxides or functional groups with higher oxygen content with carbon and silicon elements. These functional groups form pores in the anode material or regulate the distribution and size of the pores of the anode material. They improve the mechanical properties and structure stability of the anode material, and improve the electron conduction performance and electrochemical reaction kinetics of the anode material, which facilitate improvement of the charge-discharge efficiency of the battery prepared by the anode material. They also affect the surface chemical properties of the anode material, such as the formation of surface active sites, further promoting the interaction between the anode material and the electrolyte, and optimizing the overall performance of the battery.

Compared with the prior art, the anode material provided by embodiments of the present application has the following beneficial effects:
1. In embodiments of the present application, by controlling the pore volumes M and N of the anode material before and after the pressurization, the particle spatial collapse ratio P of the anode material is controlled within a range of 0.05 to 0.85, to modulate the rigidity strength of the anode material. On the one hand, the pulverization problem caused by excessive stress generated in the first matrix of the anode material during lithium intercalation and deintercalation is improved, which enhances the structure stability of the anode material during lithiation and improves the cycle stability; on the other hand, by utilizing the internal collapsibility of the anode material, the anode material is guided to tend to expand inward, so that the outer deformation of the overall particle is smaller, thereby improving the initial efficiency of the battery prepared by the anode material, and effectively reducing the volume expansion of the anode material. Thereby, it ensures that the volume expansion effect of the anode material is reduced, the external deformation of the anode material is stabilized, the formation of a stable solid electrolyte membrane is facilitated, and the electrochemical performance of the anode material is improved, such as improving the cycle stability of the battery prepared by the anode material. Moreover, it solves the problems of breakage and cracking that are easily occurred to the electrode plate prepared by the anode material during a rolling process, and solves the problems such as poor processability of the anode material.
2. In the anode material provided by embodiments of the present application, the second matrix is deposited inside the first matrix, and the pores are formed, and then the pore volume of the anode material is modulated to control the particle spatial collapse ratio of the anode material, thereby reducing the expansion rate of the anode material and improving the electrochemical performance of the anode material. In addition, the anode material also has a coating layer. Forming the coating layer on the surface of the anode material reduces the dissolution amount of the anode material during cycling, thereby reducing the side reactions caused by contact between the dissolved first matrix and the electrolyte.

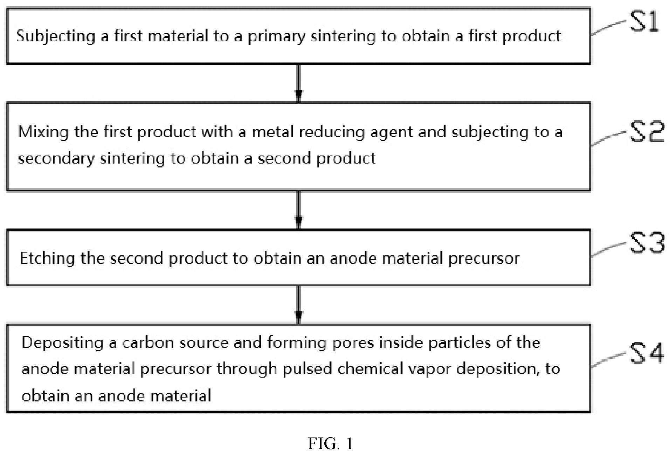

Referring to FIG. 1, the preparation method of the anode material provided by embodiments of the present application specifically includes the following steps:

Step S1, subjecting a first material to a primary sintering to obtain a first product.

Specifically, placing the first material into a reaction device (such as an atmosphere furnace), subjecting to the primary sintering under a protective atmosphere, and cooling, to obtain the first product. The main purpose of subjecting the first material to the primary sintering is to pretreat the first material to reduce oxidation and to promote the pyrolysis and crystallization of the first material, so as to stabilize the structure of the first product for subsequent chemical reactions and composite steps, ensuring the first product to have a certain crystal structure and chemical activity.

In some embodiments, the first material includes an elementary substance or a composition of at least one of silicon, germanium, antimony, tin, and boron. For example, when elemental silicon is used as the first material, the specific capacity of the prepared anode material is increased, thereby increasing the energy density of the battery prepared by the anode material.

In some embodiments, the first material includes a silicon-based material, and the silicon-based material includes amorphous silicon, crystalline silicon, or a composite of crystalline silicon and amorphous silicon.

In some embodiments, the first material includes a silicon-based material, and the silicon-based material includes at least one of silicon oxide, and silicon alloy.

In some embodiments, the first material has a morphology including at least one of dot, spherical, ellipsoidal, and flake shape..

In some embodiments, the first material has a purity greater than 99%. Taking silicon particles as the first material as an example, high-purity silicon are more conducive to Li-Si alloying with lithium, improving the cycling performance of the battery.

In some embodiments, the first material has a median particle size D50 of 0.1 µm to 20 µm, which, for example, may be 0.1 µm, 5 µm, 8 µm, 10 µm, 12 µm, 15 µm, or 20 µm. Within the above defined range, it helps to ensure the uniformity and consistency of the first material during heat treatment and chemical reaction. In addition, the smaller particle size facilitates improvement of the specific capacity of the battery and reduction of the volume expansion of the anode material. Further, the median particle size D50 of the first material is 2 µm to 15 µm. A particle size test method for the first material is a particle size distribution testing through a laser diffraction method by using a Malvern laser particle size analyzer (Mastersizer 3000), then a volume-based cumulative particle size distribution is measured, where D50 represents the particle size corresponding to a cumulative particle size distribution percentage reaching 50%.

In some embodiments, the primary sintering is performed by heating to a primary sintering temperature of 250°C to 1150°C at a heating rate of 1°C/min to 20°C/min and maintaining the temperature for 3 h to 12 h. The primary sintering temperature may further be 500°C to 1000°C, which, for example, may be 250°C, 350°C, 400°C, 500°C, 600°C, 700°C, 800°C, 850°C, 900°C, 950°C, 1000°C, or 1150°C, or other values within the above range, which is not limited herein. The appropriate heating rate, sintering temperature, and holding time are contribute to pretreat the first material to form a certain crystal structure, providing a basis for the subsequent reaction with a metal reducing agent.

In some embodiments, the protective atmosphere includes at least one of argon, nitrogen, and helium, to decrease an oxide formed by reacting the first material and oxygen at a high temperature, thereby maintaining the purity and activity of the first material.

Step S2, mixing the first product with a metal reducing agent and subjecting to a secondary sintering to obtain a second product.

Specifically, mixing uniformly the first product and the metal reducing agent in a certain proportion, placing into a reaction device (such as a reaction furnace) with introducing a protective gas to displace the air, subjecting to the secondary sintering, and cooling, to obtain the second product. The addition of the metal reducing agent is to chemically react with the first product. For example, the first product formed by using silicon as the first material reacts with the metal reducing agent to form a silicon-metal compound or a silicon-metal alloy. The secondary sintering also helps to ensure the uniformity and stability of the anode material.

In some embodiments, the metal reducing agent includes at least one of magnesium powder, aluminum powder, and lithium powder. The above metal reducing agents all possess good reducibility, which is conducive to the reduction and alloying of the first product. Meanwhile, the introduction of the metal reducing agent also facilitates improvement of the electrical conductivity, ion diffusion performance, and cycle stability of the anode material.

In some embodiments, a mass ratio of the first product and the metal reducing agent is 1:(0.2 to 1.2), which, for example, may be 1:0.2, 1:0.3, 1:0.4, 1:0.5, 1:0.6, 1:0.7, 1:0.8, 1:0.9, 1:1, 1:1.1, or 1:1.2, and further may be 1:(0.2 to 0.8). A suitable ratio promotes a favorable reaction between the first product and the metal reducing agent.

In some embodiments, the secondary sintering is performed by heating to a primary sintering temperature of 250°C to 950°C at a heating rate of 1°C/min to 30°C/min and maintaining the temperature for 1 h to 48 h. The temperature may further be 250°C, 350°C, 400°C, 500°C, 600°C, 700°C, 800°C, 850°C, 900°C, or 950°C. The secondary sintering temperature may further be 300°C to 600°C, or any other value within the above range, which is not limited herein. The appropriate heating rate, sintering temperature, and holding time provide adequate temperature and duration for the reaction, facilitating the reaction between the first product and the metal reducing agent, and improving the crystallinity and crystal structure stability of the second product.

Step S3: etching the second product to obtain an anode material precursor.

Specifically, placing the second product obtained in step S2, in a certain proportion, into an etching solution for purification under certain conditions, and washing and drying, to obtain the anode material precursor. An acid etching removes impurities such as metals, by-products, etc., from the surface of the second product, to form the anode material precursor, improving the purity and activity of the anode material precursor and reducing the impact of the impurities on the electrochemical performance of the anode material. A clean anode material precursor provides a good foundation for the pore-forming step and subsequent deposition of the second material.

In some embodiments, the etching solution includes one of hydrochloric acid, nitric acid, sulfuric acid, and hydrofluoric acid. These acidic solutions effectively remove the impurities such as metals, by-products, etc., from the surface of the second product, reducing the impact of the impurities on the electrochemical performance of the subsequently prepared anode material.

In some embodiments, a mass ratio of the second product and the etching solution is 1:(5 to 20), which, for example, may be 1:5, 1:8, 1:10, 1:15, or 1:20, or any other value within the above range, which is not limited herein. By controlling the ratio of the second product and the etching solution, the surface of the second product is fully exposed during the etching process to ensure optimal etching results.

In some embodiments, the etching solution has a molar concentration of 1 mol/L to 10 mol/L. The molar concentration of the etching solution affects the concentration of active ions or molecules in the etching solution, directly influencing the etching rate and effect. Selecting an appropriate molar concentration promotes a desired etching effect in a short time, while avoiding over-etching or incomplete etching.

In some embodiments, the etching has a duration of 0.5 h to 10 h, which ensures full etching to completely remove impurities and surface contaminants.

In some embodiments, the etching has a temperature of less than or equal to 35°C. Controlling the temperature of the etching to be lower is contribute to avoiding an excessively rapid chemical reaction rate, maintaining the controllability and safety of the etching.

In some embodiments, oxygen element in the anode material precursor accounts for a mass content of less than 5%. Controlling the oxygen element content reduces the negative impact of impurities on the electrochemical performance of the material, ensuring the electrochemical activity and stability of the anode material precursor.

In some embodiments, water in the anode material precursor accounts for a mass content of less than 1.2%. The low water content is contribute to decreasing the oxidation reaction of the anode material precursor, maintaining the purity and stability of the anode material precursor.

In some embodiments, the anode material precursor has a median particle size of 0.1 µm to 15 µm, which, for example, may be 0.1 µm, 0.2 µm, 0.5 µm, 1 µm, 2 µm, 5 µm, 10 µm, or 15 µm, and further may be 1 µm to 10 µm, or other values within the above range, which is not limited herein. The median particle size affects the uniformity and surface area of the anode material precursor, and an appropriate particle size range is contribute to optimizing the electrochemical reaction rate and energy storage capacity of the anode material.

In some embodiments, the anode material precursor has an average silicon grain size of 0.2 nm to 15 nm, which, for example, may be 0.2 nm, 0.5 nm, 1 nm, 2 nm, 5 nm, 8 nm, 10 nm, 12 nm, or 15 nm, and further may be 2 nm to 15 nm, or other value within the above range, which is not limited herein. Within the above range, it is conducive to the progress of electrochemical reactions and the rapid charge transport, thereby improving the electrochemical performance of the anode material.

In some embodiments, the anode material precursor has a porosity of 25% to 55%, which, for example, may be 1:0.2, 1:0.3, 1:0.4, 1:0.5, 1:0.6, 1:0.7, 1:0.8, 1:0.9, 1:1, 1:1.1, or 1:1.2, and further may be 35% to 55%, or other value within the above range, which is not limited herein. The suitable porosity, on the one hand, is contribute to increasing the specific surface area of the anode material and the permeability of the electrolyte, promoting the electrochemical reaction and the stability of the material, on the other hand, provides a foundation for the subsequent deposition of the second material and the formation of pores.

In some embodiments, the anode material precursor has a specific surface area of 250 m²/g to 550 m²/g, which, for example, may be 250 m²/g, 300 m²/g, 350 m²/g, 400 m²/g, 450 m²/g, 500 m²/g, or 550 m²/g, and further may be 200 m²/g to 500 m²/g, or other value within the above range, which is not limited herein. Within the above range, the anode material precursor has a higher specific surface area, which is conducive to the subsequent contact reaction with the second material.

In some embodiments, the anode material precursor has a pore volume of 0.28 cm³/g to 0.56 cm³/g, which, for example, may be 0.28 cm³/g, 0.3 cm³/g, 0.4 cm³/g, 0.5 cm³/g, or 0.56 cm³/g, and further may be 0.3 cm³/g to 0.5 cm³/g, or other value within the above range, which is not limited herein. The high pore volume of the anode material precursor provides space for the subsequent deposition of the second material and maintains sufficient space to form necessary pores, so as to optimize the performance and stability of the anode material.

Step S4: depositing a second material inside particles of the anode material precursor through pulsed chemical vapor deposition, to obtain an anode material.

Specifically, placing the anode material precursor with a pore structure into a reaction device (such as a reaction furnace) with introducing a protective gas to displace the air therein, heating to a certain temperature, feeding gaseous second material in a pulse way, varying deposition rate and efficiency of the second material therein by controlling gas amount in a short-term, and continuously depositing carbon source in the pores inside the particles of the anode material precursor by continuously introducing the second material, maintaining the temperature for a certain period for a thermal cracking reaction of the second material to enable the second material to be deposited inside the anode material precursor and to allow the anode material precursor to reserve pores therein, to obtain the anode material.

In this step, through pulsed chemical vapor deposition, the anode material precursor is enabled to deposit the second material therein and to reserve pores. By adopting pulsed gas-feeding, the deposition rate of the second material inside the anode material precursor is precisely controlled, so that the deposition rates increases gradually from the inside to the outside, enabling the anode material precursor to deposit the second material therein and to reserve part of the pores, thereby modulating the pore volume of the anode material to control the particle spatial collapse ratio of the anode material.

In some embodiments, the second material includes a carbon material, and the carbon material includes at least one of artificial graphite, natural graphite, amorphous carbon, activated carbon, mesocarbon microbead, carbon nanotube, carbon nanofiber, and graphene. The second material, selected from the above materials, functions to form a conductive network by deposited inside the anode material precursor.

In some embodiments, the second material includes a non-carbon material, and the non-carbon material includes at least one of metal, metal oxide, silicide, silicate, phosphate, titanate, and aluminum borate.

In some embodiments, the metal oxide includes at least one of aluminum oxide, zirconium oxide, germanium dioxide, and manganese dioxide.

In some embodiments, the silicide includes at least one of silicon carbide and silicon nitride.

In some embodiments, the silicate includes at least one of cordierite, mullite, and zeolite. It can be appreciated that the silicate of the present application is mainly a natural silicate mineral, where cordierite (magnesium aluminum silicate) has a chemical formula of Mg₂Al₄Si₅O₁₈, which contains elements such as Na, K, Ca, Fe and Mn, and H₂O; mullite has a chemical formula of 3Al₂O₃-2SiO₂; zeolite (aluminosilicate) has a chemical formula of AₘBₚO₂ₚ·nH₂O, where A represents a cation, typically including a monovalent or divalent metal ion such as Ca, Na, K, Ba, and Sr; B represents a basic unit for constituting framework structure of the zeolite, namely Si and Al atoms, p is a valence of the cation, m is number of the cation A, and n is number of the water molecule.

In some embodiments, the phosphate includes at least one of aluminum phosphate, magnesium phosphate, calcium phosphate, titanium phosphate, chromium phosphate, cobalt phosphate, nickel phosphate, germanium phosphate, zirconium phosphate, niobium phosphate, molybdenum phosphate, tantalum phosphate, tungsten phosphate, and lanthanum phosphate.

In some embodiments, the titanate includes at least one of calcium titanate, iron titanate, lithium titanate, and barium titanate.

In some embodiments, the carbon vapor deposition has a heating rate of 1°C/min to 30°C/min. Controlling the heating rate affects the transport and decomposition speed of the second material in the reaction device. The appropriate heating rate uniformly heats the anode material precursor in reaction chamber to reach a reaction temperature suitable for the thermal cracking of the second material, while avoiding non-uniform deposition or other adverse reaction effects caused by excessively rapid heating.

In some embodiments, the vapor deposition has a reaction temperature of 200°C to 1050°C, which, for example, may be 200°C, 300°C, 350°C, 400°C, 500°C, 600°C, 700°C, 800°C, 850°C, 900°C, 950°C, 1000°C, or 1050°C, or other value within the above range, which is not limited herein, and further may be 500°C to 1000°C. The reaction temperature is an essential parameter that affects the thermal cracking reaction rate and deposition quality of the second material. Performing the reaction within an appropriate temperature range controls the thermal cracking rate of the second material, enabling it to deposit inside the anode material precursor and form the desired pores.

In some embodiments, the vapor deposition has a holding time of 1 h to 24 h. The sufficient holding time is contribute to ensuring the uniform deposition of the second material inside the anode material precursor, forming a stable structure and pore distribution.

In some embodiments, the gaseous carbon source includes at least one of acetylene, methane, ethylene, propane, toluene, cyclohexane, ethanol, ethylene, propylene, pyrrole, and acetonitrile.

In some embodiments, the gaseous carbon source has a flow rate of 0.1 L/min to 10 L/min, which, for example, may be 0.1 L/min, 0.5 L/min, 1 L/min, 2 L/min, 3 L/min, 4 L/min, 5 L/min, 6 L/min, 7 L/min, 8 L/min, 9 L/min, or 10 L/min, or other value within the above range, which is not limited herein, and further may be 0.5 L/min to 5 L/min. Controlling the flow rate of the gaseous carbon source regulates the rate and concentration of the carbon source for entering the reaction device, thereby precisely controlling the carbon deposition rate of the carbon source inside the anode material precursor.

In some embodiments, the pulse has a frequency of 10 Hz to 500 Hz, which may specifically be 10 Hz, 50 Hz, 100 Hz, 150 Hz, 200 Hz, 300 Hz, 400 Hz, 450 Hz, or 500 Hz, or other value within the above range, which is not limited herein. The pulse has a single duration of 10 ms to 800 ms, which may specifically be 10 ms, 50 ms, 100 ms, 150 ms, 300 ms, 500 ms, 600 ms, 700 ms, or 800 ms, or other value within the above range, which is not limited herein. Pulsed gas feeding controls high-concentration input of the second material in a short term, and adjusting the frequency and duration of the pulse precisely controls the deposition process of the second material.

In some embodiments, the pulse has a total duration of 1 h to 8 h, which may specifically be 1 h, 2 h, 3 h, 4 h, 5 h, 6 h, 7 h, 8 h, or other value within the above range, which is not limited herein. The pulse duration affects the deposition amount of the second material and the continuity of the reaction. The appropriate pulse duration promotes sufficient deposition of the second material to form the desired pores, thereby optimizing the electrochemical performance and cycle stability of the prepared anode material.

Further, depositing a coating material on surface of the anode material precursor by pulsed chemical vapor deposition. Forming a coating layer on the surface of the anode material precursor is conducive to reducing the dissolution of the active material in the anode material during cycling, thereby reducing side reactions between the dissolved silicon particles and the electrolyte; and is also conducive to alleviating the volume expansion of the anode material.

In some embodiments, coating the anode material precursor with a coating material to obtain the anode material.

In some embodiments, the coating material includes a carbon material, and the carbon material includes at least one of graphene, soft carbon, and hard carbon. Reasonably designing the carbon material raw material for the anode material effectively inhibits the volume expansion of silicon particles, reduces structure damage to the anode material during cycling, and further enhances the mechanical strength and resistance to pressure of the anode material.

In some embodiments, the coating material includes a metal oxide, and the metal oxide includes at least one of titanium oxide, aluminum oxide, lithium oxide, cobalt oxide, and vanadium oxide.

In some embodiments, the coating layer includes a nitride, and the nitride layer includes at least one of titanium nitride, vanadium nitride, cobalt nitride, nickel nitride, and carbon nitride.

In some embodiments, the coating material includes a conductive polymer, and the conductive polymer includes at least one of polyaniline, polyacetylene, polypyrrole, polythiophene, poly(3-hexylthiophene), poly(p-phenylene vinylene), polypyridine, and polyphenylene vinylene.

In some embodiments, the coating material includes a fluoride, and the fluoride includes at least one of vinyl fluoride, fluoropolymer, lithium fluoride, sodium fluoride, potassium fluoride, fluorocarbon polymer, fluorosilicone polymer, hexafluorobutyl acrylate, polytetrafluoroethylene (PTFE), fluorinated ethylene propylene copolymer (FEP), perfluoroalkoxy resin (PFA), polychlorotrifluoroethylene (PCTFE), ethylene-chlorotrifluoroethylene copolymer (ECTFE), polyvinylidene fluoride (PVDF), and polyvinyl fluoride.

In some embodiments, the coating material includes a phosphate, and the phosphate includes at least one of magnesium phosphate, calcium phosphate, aluminum phosphate, titanium phosphate, chromium phosphate, cobalt phosphate, nickel phosphate, germanium phosphate, zirconium phosphate, niobium phosphate, molybdenum phosphate, tantalum phosphate, tungsten phosphate, and lanthanum phosphate.

The suitable particle spatial collapse ratio of the anode material and the uniform coating layer on the surface of the anode material improve the structure stability of the anode material during the lithiation, reduce the expansion rate of the anode material, facilitate formation of a stable solid electrolyte membrane on the surface of the anode material, and also facilitate improvement of the electrical conductivity of the anode material, thereby enhancing the electrochemical performance of the anode material.

Compared with the prior art, the preparation method of the anode material provided by embodiments of the present application has the following beneficial effects:
1. Through the pulsed chemical vapor deposition, the deposition rate of the second material inside the anode material precursor is precisely controlled, so that the deposition rates increases gradually from the inside to the outside, enabling the anode material precursor to deposit the second material therein and to reserve part of the pores, thereby precisely modulating the pore volume of the anode material to control the particle spatial collapse ratio of the anode material, so as to improve the structure stability of the anode material and improve the cycling performance and rate performance of the anode material.
2. Through the pulsed chemical vapor deposition, a uniform coating layer is also formed on surface of the anode material. The uniform coating layer further improves the structure stability of the anode material during the lithiation, reduces the expansion rate of the anode material, facilitates formation of a stable solid electrolyte membrane on the surface of the anode material to improve the cycling performance of the anode material, and also facilitates improvement of the electrical conductivity of the anode material, thereby enhancing the electrochemical performance of the anode material.
3. The preparation method is simple, efficient, and highly controllable, which is conducive to the large-scale production of the anode material and has an excellent commercial prospect.

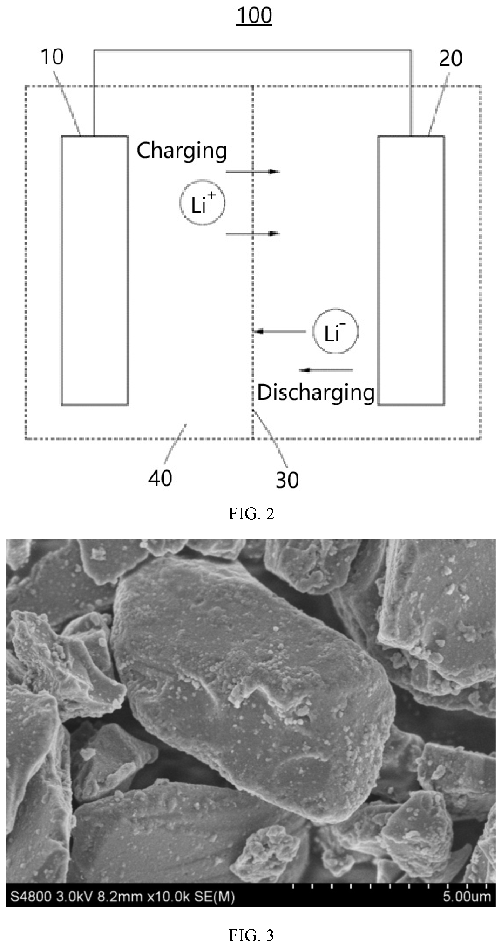

Referring to FIG. 2, embodiments of the present application further provide a battery. The battery 100 includes a cathode plate 10, an anode plate 20, a separator 30, and an electrolyte 40, where the anode plate 20 includes the anode active material as defined above. The battery 100 prepared by using the above anode material has the advantages such as high capacity, high initial efficiency, long cycle life, excellent rate performance, and low expansion.

The above anode material, its preparation method, and the battery are further described below through specific embodiments.

### Test methods:

### (1) Test method for specific surface area and pore volume of an anode material:

A Micromeritics ASAP2460 surface area and pore diameter analyzer is used, with an adsorption gas of N₂. A certain amount of sample is weighed and placed into a specialized bubble tube for measuring specific surface area, purged with nitrogen at 300°C for one hour at the degassing station, and cooled to room temperature after the degassing is complete. After weighing the sample for an actual mass, the bubble tube containing the sample is installed onto the specific surface area and pore diameter analyzer to measure the specific surface area of the sample after inputting the sample mass. The testing can be referred to GB/T 19587-2004 "Determination of the specific surface area of solids by gas adsorption using the BET method" or the equipment manual for details.

### (2) Test method for the particle spatial collapse ratio P of the anode materialas the following:

1 kg of the anode material is taken to measure its pore volume as M cm³/g, then placed into an aluminum-plastic film bag for a vacuum treatment with a vacuum degree controlled below 10 kPa, and the aluminum-plastic film bag is sealed. The aluminum-plastic film bag is placed into an isostatic pressing device with a pressure set as 80 MPa, the pressure is maintained for 1 h under this pressure, and then the pore volume of the anode material is measured as N cm³/g. The particle spatial collapse ratio is calculated as P=(M-N)/M.

### (3) The particle size of the anode material:

The particle size test method is performed in accordance with GB/T 19077-2016. The number-based cumulative particle size distribution of the anode material is measured through the laser diffraction method by using a Malvern laser particle size analyzer (Mastersizer 3000), where Dn(50) represents the particle size corresponding to the number-based cumulative particle size distribution reaching 50%.

### (4) Test method for tap density:

A Bettersize tap density tester is used. A certain amount of sample is weighed, and vibrated for 3000 times at 300 times/min for measuring the tap density of the anode material.

### (5) Test methods for oxygen content and carbon content:

The mass content of oxygen element in the anode material is measured by using a Fourier transform infrared spectrometer. The mass content of carbon element in the anode material is measured through the thermogravimetric analysis.

### (6) SEM test:

The scanning electron microscope characterization is performed by a transmission electron microscope with an operating voltage of 200kV to observe the structure of the anode material.

### (7) Test method for average size of the primary particles:

The material is cross-cut by using a FIB-SEM equipment, and the sizes of 20 primary particles are measured by SEM. The diameters of the smallest inscribed circles of the primary particles are taken as the particle size, an average value of which is calculated as the average size of the primary particles.

The material is cross-cut by using a FIB-SEM equipment, and the thickness of the coating layer is measured by SEM.

### (8) Test method for average size of the silicon grains:

The XRD pattern of the sample is measured by an X-ray diffractometer, and the full width at half maximum of the diffraction peaks and the corresponding Bragg angles of the sample are obtained by Jade software, thus the average size of the silicon grains is calculated by the Scherrer formula D=Kγ/B cosθ.

### (9) Electrochemical performance test:

An anode material is mixed with sodium carboxymethyl cellulose, styrenebutadiene rubber, conductive graphite (KS-6), and carbon black (SP) in a mass ratio of 92:2:2:2:2 to prepare a slurry, which is uniformly coated onto a copper foil and dried to form an anode plate. The anode plate is then assembled into a CR2016 button battery in a glove box filled with argon, by using a polypropylene microporous membrane as the separator, 1 mol/L lithium hexafluorophosphate (with a solvent of mixture of ethylene carbonate, ethyl methyl carbonate, and dimethyl carbonate) as the electrolyte, and a lithium metal sheet as the counter electrode plate.

The batteries prepared by the anode materials of Examples and Comparative Examples were tested on a Land CT2001A Battery Test System for the discharge specific capacity, where the discharge specific capacity is defined as the ratio of the discharge capacity for 1h to the battery capacity.

The batteries prepared by the anode materials of Examples and Comparative Examples were tested on a Land CT2001A Battery Test System for the initial coulombic efficiency, with a charge-discharge current of 0.05C, to obtain the initial coulombic efficiencies.

The batteries prepared by the anode materials of Examples and Comparative Examples were tested on a Land CT2001A Battery Test System for the battery capacity after 50 cycles and the capacity retention after 50 cycles, with a charge-discharge current of 0.25C, where the capacity retention after 50 cycles at 0.25C = the discharge capacity at 50th cycle / the discharge capacity at 1st cycle * 100%.

### Example 1

Step 1: a silicon monoxide material was placed into an atmosphere furnace and heated to 950°C at a heating rate of 3°C/min under argon atmosphere, and the temperature was maintained for 5 h, followed by cooling to obtain a first product.

Step 2: the first product was mixed uniformly with metallic aluminum powder in a mass ratio of 1:0.3 and placed into a reaction furnace, and protective gas was introduced to displace the air. The furnace was heated to 650°C at a heating rate of 3°C/min, and the temperature was maintained for 4 h, followed by cooling to obtain a second product.

Step 3: the second product was placed into an etching solution for purification, with a mass ratio of the second product and the etching solution of 1:5, a concentration of the etching solution of 6 mol/L, an etching duration of 1.5 h, and an etching temperature controlled at 25°C; then washed and dried to obtain an anode material precursor.

Step 4: 500 g of the anode material precursor was placed into a rotary atmosphere furnace, and the air therein was displaced with an inert gas. After the furnace was heated to 750°C at a heating rate of 3°C/min under argon atmosphere, the flow rate of acetylene gas was set to 2.5 L/min, a carbon source was fed into a pulse generator, with setting the pulse frequency to 50 Hz, the single pulse duration to 200 ms, and the total pulse duration to 3 h. After turning off the pulse generator, the acetylene gas was continually fed at a flow rate of 2.5 L/min for 2 h, followed by cooling to obtain the anode material.

### Example 2

Step 1: a silicon monoxide material was placed into an atmosphere furnace and heated to 970°C at a heating rate of 3°C/min under argon atmosphere, and the temperature was maintained for 6 h, followed by cooling to obtain a first product.

Step 2: the first product was mixed uniformly with metallic aluminum powder in a mass ratio of 1:0.3 and placed into a reaction furnace, and protective gas was introduced to displace the air. The furnace was heated to 650°C at a heating rate of 3°C/min, and the temperature was maintained for 4 h, followed by cooling to obtain a second product.

Step 3: the second product was placed into an etching solution for purification, with a mass ratio of the second product and the etching solution of 1:10, a concentration of the etching solution of 3 mol/L, an etching duration of 2.5 h, and an etching temperature controlled at 25°C; then washed and dried to obtain an anode material precursor.

Step 4: 500 g of the anode material precursor was placed into a rotary atmosphere furnace, and the air therein was displaced with an inert gas. After the furnace was heated to 700°C at a heating rate of 3°C/min under argon atmosphere, the flow rate of acetylene gas was set to 0.5 L/min, a carbon source was fed into a pulse generator, with setting the pulse frequency to 500 Hz, the single pulse duration to 10 ms, and the total pulse duration time to 8 h. After turning off the pulse generator, the acetylene gas was continually fed at a flow rate of 2.5 L/min for 1 h, followed by cooling to obtain the anode material.

### Example 3

Step 1: a silicon monoxide material was placed into an atmosphere furnace and heated to 970°C at a heating rate of 3°C/min under argon atmosphere, and the temperature was maintained for 6 h, followed by cooling to obtain a first product.

Step 2: the first product was mixed uniformly with metallic aluminum powder in a mass ratio of 1:0.3 and placed into a reaction furnace, and protective gas was introduced to displace the air. The furnace was heated to 650°C at a heating rate of 3°C/min, and the temperature was maintained for 4 h, followed by cooling to obtain a second product.

Step 3: the second product was placed into an etching solution for purification, with a mass ratio of the second product and the etching solution of 1:10, a concentration of the etching solution of 3 mol/L, an etching duration of 2.5 h, and an etching temperature controlled at 25°C; then washed and dried to obtain an anode material precursor.

Step 4: 500 g of the anode material precursor was placed into a rotary atmosphere furnace, and the air therein was displaced with an inert gas. After the furnace was heated to 900°C at a heating rate of 3°C/min under argon atmosphere, the flow rate of acetylene gas was set to 9.5 L/min, a carbon source was fed into a pulse generator, with setting the pulse frequency to 10 Hz, the single pulse duration to 800 ms, and the total pulse duration time to 4 h. After turning off the pulse generator, the acetylene gas was continually fed at a flow rate of 1.5 L/min for 2 h, followed by cooling to obtain the anode material.

### Example 4

Step 1: a silicon monoxide material was placed into an atmosphere furnace and heated to 950°C at a heating rate of 3°C/min under argon atmosphere, and the temperature was maintained for 5 h, followed by cooling to obtain a first product.

Step 2: the first product was mixed uniformly with metallic aluminum powder in a mass ratio of 1:0.2 and placed into a reaction furnace, and protective gas was introduced to displace the air. The furnace was heated to 620°C at a heating rate of 3°C/min, and the temperature was maintained for 5 h, followed by cooling to obtain a second product.

Step 3: the second product was placed into an etching solution for purification, with a mass ratio of the second product and the etching solution of 1:10, a concentration of the etching solution of 5 mol/L, an etching duration of 1.5 h, and an etching temperature controlled at 25°C; then washed and dried to obtain an anode material precursor.

Step 4: 500 g of the anode material precursor was placed into a rotary atmosphere furnace, and the air therein was displaced with an inert gas. After the furnace was heated to 950°C at a heating rate of 3°C/min under argon atmosphere, the flow rate of acetylene gas was set to 10 L/min, a carbon source was fed into a pulse generator, with setting the pulse frequency to 10 Hz, the single pulse duration to 800 ms, and the total pulse duration time to 8 h. After turning off the pulse generator, the acetylene gas was continually fed at a flow rate of 0.1 L/min for 3 h, followed by cooling to obtain the anode material.

### Example 5

The specific process for this preparation method referred to Example 1, expecting that in step 4, the pulse frequency was 20Hz. The rest of the preparation method for the anode material was substantially the same as in Example 1, which is not repeated here.

### Example 6

The specific process for this preparation method referred to Example 1, expecting that in step 4, the pulse frequency was 100Hz. The rest of the preparation method for the anode material was substantially the same as in Example 1, which is not repeated here.

### Example 7

The specific process for this preparation method referred to Example 1, expecting that in step 4, the total pulse duration was 1 h. The rest of the preparation method for the anode material was substantially the same as in Example 1, which is not repeated here.

### Example 8

The specific process for this preparation method referred to Example 1, expecting that in step 4, the total pulse duration was 6 h. The rest of the preparation method for the anode material was substantially the same as in Example 1, which is not repeated here.

### Example 9

This example was performed in the same way as Example 1, expecting that in step 4:
Step 4: 500 g of the anode material precursor was placed into a rotary atmosphere furnace, and the air therein was displaced with an inert gas. After the furnace was heated to 550°C at a heating rate of 3°C/min under argon atmosphere, silane gas was introduced at 1 L/min, and the temperature was maintained for 2 h. Then the silane gas was turned off, and the temperature was raised to 750°C, the flow rate of acetylene gas was set to 2.5 L/min, a carbon source was fed into a pulse generator, with setting the pulse frequency to 50 Hz, the single pulse duration to 200 ms, and the total pulse duration to 3 h. After turning off the pulse generator, the acetylene gas was continually fed at a flow rate of 2.5 L/min for 2 h, followed by cooling to obtain the anode material.

### Example 10

This example was performed in the same way as Example 1, expecting that in steps 1-3:
Step 1: a nutshell was carbonated at 500°C for 5 h. The carbonized product was acid-washed with 5 mol/L hydrochloric acid for 4 h, dried, and placed in a heat treatment furnace. A mixed gas of water vapor and nitrogen (in a volume ratio of 1:80) was introduced, and an activation was performed at a temperature of 800 °C for 12 h, to obtain a first product with an average pore diameter of 2.1 nm.
Step 2: the first product was placed into a 0.4 mol/L tin chloride solution, stirred mechanically for 30 min, then heated to 95°C, and a 1.2 mol/L urea solution was slowly added into. The solution was poured into a beaker to be cooled, followed by aging for 24 h. The aged product was transferred into a centrifuge tube for centrifugation, and then washed and dried, to obtain a second product.
Step 3: the second product was placed into a rotary furnace under argon protection, and heated to 700°C at a heating rate of 3°C/min; then hydrogen gas was introduced at 2 L/min, the temperature was maintained for 2 h, followed by cooling to room temperature to prepare an anode material precursor.

### Example 11

Step 1: germanium dioxide and magnesium powder was mixed uniformly in a molar ratio of 1:2 and placed into a box-type atmosphere furnace under argon protection. The furnace was heated to 75°C at a heating rate of 3°C/min, and the temperature was maintained for 3 h to obtain a first product.

Step 2: the first product was placed into an etching solution for purification, with a mass ratio of the first product and the etching solution of 1:5, a concentration of the etching solution of 1 mol/L, an etching duration of 2.5 h, and an etching temperature controlled at 25°C; then washed and dried to obtain an anode material precursor.

Step 3: 500 g of the anode material precursor was placed into a rotary atmosphere furnace, and the air therein was displaced with an inert gas. After the furnace was heated to 700°C at a heating rate of 3°C/min under argon atmosphere, the flow rate of acetylene gas was set to 2.5 L/min, a carbon source was fed into a pulse generator, with setting the pulse frequency to 50 Hz, the single pulse duration to 200 ms, and the total pulse duration to 3 h. After turning off the pulse generator, the acetylene gas was continually fed at a flow rate of 2.5 L/min for 2 h, followed by cooling to obtain the anode material.

### Example 12

Step 1: a silicon monoxide material was placed into an atmosphere furnace and heated to 950°C at a heating rate of 3°C/min under argon atmosphere, and the temperature was maintained for 5 h, followed by cooling to obtain a first product.

Step 2: the first product was placed into an etching solution for purification, with a mass ratio of the first product and the etching solution of 1:10, a concentration of the etching solution of 3 mol/L, an etching duration of 2.5 h, and an etching temperature controlled at 35°C; then washed and dried to obtain an anode material precursor.

Step 3:500 g of the anode material precursor was placed into a rotary atmosphere furnace, and the air therein was displaced with an inert gas. After the furnace was heated to 900°C at a heating rate of 3°C/min under argon atmosphere, acetylene gas was set as a carbon source with a flow rate of 9.5 L/min and fed into a pulse generator, with setting the pulse frequency to 10 Hz, the single pulse duration to 800 ms, and the total pulse duration to 4 h. After turning off the pulse generator, the acetylene gas was continually fed at a flow rate of 1.5 L/min for 2 h, followed by cooling to obtain the anode material.

### Comparative Example 1

The specific process for this preparation method referred to Example 1, expecting that in step 4, the carbon deposition was performed by a traditional chemical vapor deposition (CVD) technique. Specifically, 500 g of an anode material precursor was placed into a rotary atmosphere furnace, and the air therein was displaced with an inert gas. After the furnace was heated to 750°C at a heating rate of 3°C/min under an argon atmosphere, the flow rate of acetylene gas was set to 2.5 L/min, and the acetylene gas was continuously fed for 5 h, followed by cooling to obtain an anode material. The rest of the preparation method for the anode material was substantially the same as in Example 1, which is not repeated here.

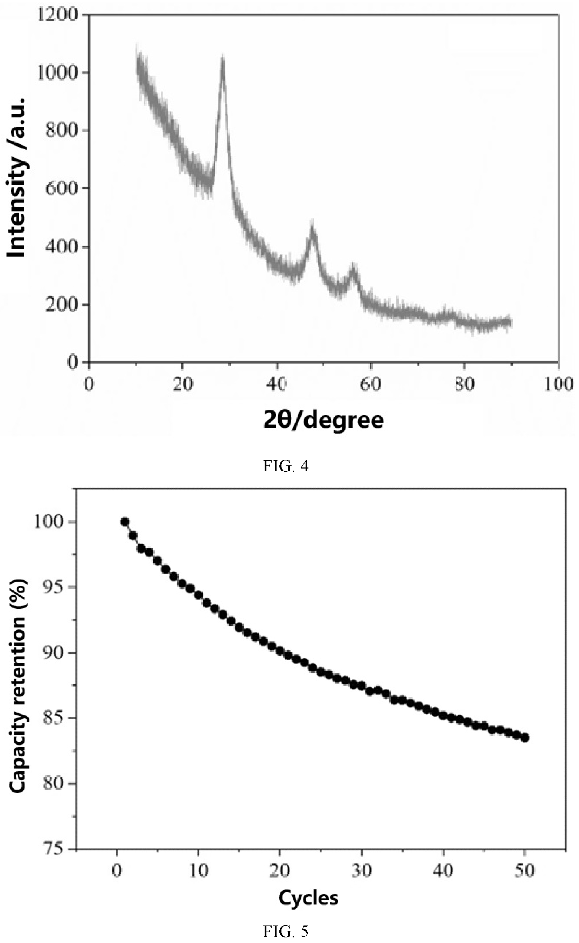

The anode materials obtained by Examples 1-12 (abbreviated as S1 to S12) and Comparative Example 1 (abbreviated as D1) were subjected to the following tests.
1. The anode materials obtained by Examples 1-12 and Comparative Example 1 were tested for the performance parameters such as specific surface area, pore volume, particle spatial collapse ratio P, particle size, tap density, oxygen content, carbon content, scanning electron microscope, X-ray diffraction, average size of the primary particles, and average size of the silicon grains. These results are shown in Table 1. Exemplarily, the scanning electron microscope result of the anode material of Example 1 is shown in FIG. 3, and the X-ray diffraction pattern result of the anode material of Example 1 is shown in FIG. 4.

**Table 1. Preparation process parameters of anode materials**

| Sam ple | First matrix | Second matrix | Pore volume M of anode material (cm³/g) | particle spatial collapse ratio P | Average diameter of pores (nm) | Average size of the silicon grains (nm) | Average particle size of primary particles of silicon-based material (nm) | Median particle size of anode material (D50, µm) | Specific surface area (g/cm³) | Compaction density (g/cm³) | Oxygen content % | Carbon content % |
|---|---|---|---|---|---|---|---|---|---|---|---|---|
| S1 | Crystalline silicon | Carbon | 0.05 | 0.25 | 4.5 | 3.5 | 10 | 5 | 5 | 1.2 | 5 | 33 |
| S2 | Crystalline silicon | Carbon | 0.002 | 0.05 | 0.55 | 3.8 | 12 | 5.2 | 1.5 | 1.1 | 4 | 35 |
| S3 | Crystalline silicon | Carbon | 0.12 | 0.8 | 20 | 3.8 | 12 | 5.2 | 14 | 0.85 | 2 | 45 |
| S4 | Crystalline silicon | Carbon | 0.1 | 0.85 | 15 | 3.5 | 12 | 5 | 8 | 0.8 | 5 | 25 |
| S5 | Crystalline silicon | Carbon | 0.04 | 0.4 | 7 | 3.5 | 10 | 5 | 6 | 1.1 | 5.3 | 30 |
| S6 | Crystalline silicon | Carbon | 0.09 | 0.5 | 11 | 3.5 | 10 | 5 | 4 | 1.25 | 3 | 39 |
| S7 | Crystalline silicon | Carbon | 0.06 | 0.3 | 8.5 | 3.5 | 10 | 5 | 7 | 1.0 | 6.5 | 28 |
| S8 | Crystalline silicon | Carbon | 0.02 | 0.2 | 2.5 | 3.5 | 10 | 5 | 3.5 | 1.4 | 2.9 | 42 |
| S9 | Crystalline silicon and amorphous silicon | Carbon | 0.045 | 0.22 | 3.5 | 2.5 | 8 | 5.2 | 4.8 | 1.22 | 4.5 | 31 |
| S10 | Carbon | Tin | 0.007 | 0.36 | 5.9 | / | / | 15 | 12 | 1.48 | / | 30 |
| S11 | Germanium | Carbon | 0.009 | 0.35 | 11 | / | / | 12.3 | 10 | 1.45 | 1.2 | 25 |
| S12 | Silicon oxide | Carbon | 0.10 | 0.66 | 2.3 | / | 15 | 6.5 | 5.0 | 1.23 | 10 | 10 |
| D1 | Crystalline silicon | Carbon | 0.21 | 0.95 | | 3.5 | 10 | 5.5 | 15 | 0.77 | 3 | 32 |

**Table 2**

| Sample | Discharge specific capacity (mAh/g) | Initial coulombic efficiency (%) | Capacity retention after 50 cycles at 0.25C | Electrode film expansion rate (%) |
|---|---|---|---|---|
| Example 1 | 2590 | 90.5 | 83.3 | 23.2 |
| Example 2 | 2510 | 89.1 | 81.4 | 24.7 |
| Example 3 | 2250 | 87.7 | 76.5 | 26.6 |
| Example 4 | 2530 | 88.1 | 78.6 | 24.5 |
| Example 5 | 2581 | 86.5 | 75.9 | 22.1 |
| Example 6 | 2453 | 89.9 | 74.3 | 21.9 |
| Example 7 | 2587 | 86.2 | 81.5 | 23.6 |
| Example 8 | 2285 | 85.9 | 81.8 | 23.5 |
| Example 9 | 2680 | 90.3 | 81.1 | 24.2 |
| Example 10 | 758 | 87.2 | 82.0 | 21.1 |
| Example 11 | 1550 | 88.2 | 81.5 | 21.0 |
| Example 12 | 1425 | 81.0 | 83.4 | 22.3 |
| Comparative Example 1 | 2560 | 85.5 | 70.5 | 24.1 |

The above results indicate that:
FIG. 3 is a scanning electron microscope image of the anode material of Example 1. From the scanning electron microscope image of FIG. 3, it can be seen that the prepared anode material has a relatively smooth surface, and there is no cracks on the particles of the anode material. FIG. 4 is an XRD pattern of the anode material of Example 1. From the XRD pattern of FIG. 4, it can be seen that the three strongest peaks at 28.4°, 47.3°, and 56.1° correspond to those of silicon (JCPDS No. 27-1402), with almost no impurity phases. According to the Scherrer formula, the particle size of the silicon grain is calculated as 3.5 nm. Through the testing, the anode material obtained by Example 1 has a pore volume of 0.09 cm³/g, a particle spatial collapse ratio P of 0.25, an average size of the silicon grains of 3.5 nm, a median particle size of 5 µm, a specific surface area of 5 m²/g, a powder compaction density of 1.2 g/cm³, an oxygen content of 5%, a mass percentage of carbon of 33%, and an average particle size of primary particles of the silicon material of 10 nm. The results show that the anode material obtained by Example 1 has suitable pore volume and particle spatial collapse ratio P, as well as excellent performance parameters such as a suitable specific surface area, high compaction density, etc.

FIG. 5 is the cycling performance curve of the button battery prepared by the anode material of Example 1. From FIG. 5, it can be seen that the button battery prepared by the anode material of Example 1 has an excellent cycling performance. After 50 cycles at a current of 0.25C, the capacity retention still reaches 83.3%. It indicates that the anode material of this Example has suitable pore volume and particle spatial collapse ratio P, which not only improves the structure stability of the anode material, but also improves the cycling performance of the anode material, thereby improving the electrochemical performance of the battery.

The anode materials obtained by Examples 2-12 also each have suitable pore volume and particle spatial collapse ratio P, as well as excellent characteristics such as suitable specific surface area, high compaction density, etc. The batteries prepared by the anode materials obtained by Examples 2-12 also have characteristics such as high specific capacity and initial efficiency, significantly improved capacity retention, and low expansion rate.

Comparative Example 1 employed the traditional chemical vapor deposition technology. Since it failed to precisely control the carbon deposition rate of the carbon source in the material to modulate the pore volume of the composite anode material and control the particle spatial collapse ratio of the composite anode material, the anode material of Comparative Example 1 has an excessively large pore volume (0.21 cm³/g), which easily causes the deformation of outer surface of the anode material, thereby leading to capacity fading and reduced cycle stability of the prepared battery. Furthermore, the particle spatial collapse ratio (0.95) is too high, thus the anode material has a relatively weaker rigidity strength, and there are relatively more pores therein. Although the volume expansion of silicon is effectively alleviated, the side reactions causing by the inflow of the electrolyte into the material are occurred due to the relatively larger volume shrinkage of the anode material, thereby resulting in severe capacity fading

It can be seen that, compared with Comparative Example 1, the anode materials obtained by Examples 1-12 all have suitable pore volumes and particle spatial collapse ratios P, as well as excellent results of structural data and electrochemical tests, indicating that the anode materials of Examples of the present application have good structure stability, which effectively reduces the expansion rate, and exhibits excellent electrochemical performances.

It should be appreciated that the above embodiments are merely exemplary embodiments adopted to illustrate the principles of the present application, but the present application is not limited thereto. For those of ordinary skill in the art, various modifications and improvements may be made without departing from the spirit and essence of the present application, and these modifications and improvements are also considered to be within the protection scope of the present application.

## Claims

1. An anode material, **characterized in that** the anode material comprises an active material, wherein the active material comprises a first matrix and a second matrix, wherein the anode material has pores, and wherein the anode material has a pore volume represented as M cm³/g, a pore volume measured after being subjected to a pressure of 80 MPa for 1 h represented as N cm³/g, and a particle spatial collapse ratio represented as P, and P=(M-N)/M, wherein 0.002≤M≤0.12, and 0.05≤P≤0.85.

2. The anode material according to claim 1, **characterized in that** the anode material satisfies at least one of the following:
(1) the M is 0.002, 0.007, 0.009, 0.02, 0.04, 0.05, 0.06, 0.08, 0.09, 0.1, 0.11, 0.12, or any value within a range defined by any two above values; and
(2) the spatial collapse ratio P of the anode material is 0.05, 0.1, 0.15, 0.2, 0.22, 0.25, 0.3, 0.35, 0.4, 0.45, 0.5, 0.55, 0.6, 0.65, 0.7, 0.75, 0.8, 0.85, or any value within a range defined by any two above values.

3. The anode material according to claim 1, **characterized in that** at least part of the second matrix is located inside the first matrix.

4. The anode material according to claim 1, **characterized in that** the pore have an average diameter of 0.5 nm to 20 nm.

5. The anode material according to claim 1, **characterized in that** the first matrix comprises an elementary substance or a composition of at least one of silicon, germanium, antimony, tin, and boron.

6. The anode material according to claim 1, **characterized in that** the first matrix comprises a silicon-based material, and the silicon-based material satisfies at least one of the following:
(1) the silicon-based material comprises amorphous silicon, crystalline silicon, or a composite of crystalline silicon and amorphous silicon; and
(2) the silicon-based material comprises at least one of silicon oxide and silicon alloy.

7. The anode material according to claim 1, **characterized in that** the second matrix satisfies at least one of the following:
(1) the second matrix comprises a carbon material, and the carbon material comprises at least one of artificial graphite, natural graphite, amorphous carbon, activated carbon, mesocarbon microbead, carbon nanotube, carbon nanofiber, and graphene; and
(2) the second matrix comprises a non-carbon material, and the non-carbon material comprises at least one of elemental metal, metal oxide, silicide, silicate, phosphate, titanate, and aluminum borate.

8. The anode material according to claim 1, **characterized in that** at least part of particles of the second matrix is located inside particles of the first matrix, and/or at least part of particles of the first matrix is located inside particles of the second matrix.

9. The anode material according to claim 1, **characterized in that** the anode material further comprises a coating layer located on at least part of surface of the active material, and a material of the coating layer comprises at least one of metal oxide, carbon material, conductive polymer, fluoride, phosphate, and nitride.

10. The anode material according to claim 9, **characterized in that** the coating layer satisfies at least one of the following:
(1) the coating layer comprises a carbon material, and the carbon material comprises at least one of graphene, soft carbon, and hard carbon;
(2) the coating layer has a thickness of 0.1 nm to 100 nm; and
(3) the coating layer has a thickness of 1 nm to 20 nm.

11. The anode material according to claim 6, **characterized in that** the silicon-based material satisfies at least one of the following:
(1) primary particles of the silicon-based material have an average particle size of 1 nm to 100 nm; and
(2) silicon grains of the silicon-based material have an average size of 0.5 nm to 15 nm.

12. The anode material according to claim 1, **characterized in that** the anode material satisfies at least one of the followings:
(1) the anode material has a median particle size of 0.2 µm to 15 µm;
(2) the anode material has a specific surface area of 0.8 m²/g to 15 m²/g; and
(3) the anode material has a powder compaction density of 0.8 g/cm³ to 1.5 g/cm³.

13. The anode material according to claim 1, **characterized in that** the second matrix comprises a carbon material, and based on 100% by mass of the anode material, carbon element in the anode material accounts for a content of 5% to 70%.

14. The anode material according to claim 1, **characterized in that** based on 100% by mass of the anode material, oxygen element in the anode material accounts for a content of less than or equal to 10%.

15. A battery, **characterized in that** the battery comprises a cathode plate, an anode plate, a separator, and an electrolyte, wherein the anode plate comprises the anode material according to any one of claims 1 to 14.
